# EUROPÄISCHE PATENTSCHRIFT

(11) **EP 0 713 901 B1**
(45) Veröffentlichungstag und Bekanntmachung des Hinweises auf die Patenterteilung: **11.02.1998**
(21) Anmeldenummer: 95890196.9
(22) Anmeldetag: 09.11.1995
(51) Int. Cl.: C08L 23/28, C08L 15/00, B60C 13/00

(54) **Kautschukmischung**
Rubber composition
Composition de caoutchouc

(30) Priorität: 24.11.1994 AT 2181/94
(43) Veröffentlichungstag der Anmeldung: 29.05.1996
(73) Patentinhaber: Semperit Reifen Aktiengesellschaft, A-2514 Traiskirchen (AT)
(72) Erfinder: Holocher-Ertl, Martin, Mag.-Dr., A-2340 Mödling (AT); Kranner, Walter, A-2514 Traiskirchen (AT)
(74) Vertreter: Vinazzer, Edith, Dipl.-Ing.

(56) Entgegenhaltungen:
- EP-A- 0 364 391
- EP-A- 0 456 571
- DE-A- 3 924 459

## Beschreibung

Die vorliegende Erfindung betrifft eine mit Schwefel vulkanisierbare, rußfreie Kautschukmischung gemäß dem Oberbegriff des Anspruches 1, ferner einen geformten Körper enthaltend diese Kautschukmischung sowie einen Fahrzeugreifen mit einem farbigen Seitenwanddessin hergestellt aus dieser Kautschukmischung.

Es ist Stand der Technik, Dekors oder Kennzeichen auf Reifenseitenwänden in einer zum ansonsten schwarzen Reifen konstrastierenden Farbe, beispielsweise in weiß, zu gestalten. Ein gängiges Verfahren zur Herstellung eines Seitenwanddekors oder einer entsprechenden Kennzeichnung in der Seitenwand besteht darin, daß die Seitenwände mit einer umlaufenden Vertiefung vorgeformt werden, in der ein ebenfalls unvulkanisierter und entsprechend eingefärbter Streifen aus einer Kautschukmischung eingelegt wird. Dabei kann zwischen dem farbigen Mischungsstreifen und dem Seitenwandteil des Reifens ein dünner Streifen aus einer sogenannten Barrieremischung zwischengelegt werden. Der farbige Mischungsstreifen wird mit einem dünnen schwarzen Mischungsstreifen abgedeckt, wobei während der nachfolgenden Vulkanisation des Reifens in der Vulkanisationsform die Ausformung des gewünschten Dessins bzw. der gewünschten Kennzeichnung erfolgt. Der fertig vulkanisierte Reifen wird nun im Seitenwandbreich soweit abgeschliffen, daß das Dekor bzw. die Kennzeichnung zum Vorschein kommt. Die zur Herstellung der Seitenwandteile verwendeten Kautschukmischungen enthalten verfärbende Mischungsbestandteile, zu welchen insbesondere das Alterungsschutzmittel in Verbindung mit dem eingesetzten Weichmacheröl zählt. Diese Mischungssubstanzen haben die Eigenschaft, an die Oberfläche zu wandern und somit in die farbige Mischung zu migrieren, was eine Verfärbung derselben bewirkt.

Es sind ferner bereits Kautschukmischungen für Bauteile von Fahrzeugreifen bekannt, deren Kautschukkomponente epoxidiertes Polydien enthält. So offenbart beispielsweise die EP-A 0 456 571 eine Elastomer-Zusammensetzung mit Halogenbutyl-Matrix, verstärkt durch einen silikathaltigen mineralischen Füllstoff. Diese Zusammensetzung enthält zwischen 1 und 50 Gewichtsteilen epoxidierten Naturkautschuk pro 100 Gewichtsteile Polymere und ist darauf abgestimmt, als luftdichte Schichte, insbesondere als Innenschichte für Fahrzeugluftreifen, eingesetzt zu werden.

Die gegenständliche Erfindung hat sich demgegenüber die Aufgabe gestellt, eine Kautschukmischung zu entwickeln, die das Eindringen von verfärbenden Mischungsbestandteilen aus angrenzenden Gummimischungen wesentlich weniger zuläßt, als die bekannten rußfreien Kautschukmischungen.

Gelöst wird die gestellte Aufgabe erfindungsgemäß dadurch, daß die Kautschukmischung epoxidiertes Polydien in einem Anteil zwischen 5 und 60 Gewichtsteilen sowie Calziumoxid in einem Anteil von 1 bis 15 Gewichtsteilen, jeweils bezogen auf 100 Gewichtsteile Kautschuk in der Mischung, enthält.

Es wurde überraschenderweise festgestellt, daß ein gewisser Anteil an einem epoxidiertem Polydien in einer derartigen vulkanisierten Kautschukmischung bewirkt, daß Alterungsschutzmittel und andere verfärbende Mischungsbestandteile aus einer angrenzenden Mischung bzw. einem angrenzenden Gummiteil wesentlich langsamer und nur in eine geringe Tiefe in das Vulkanisat aus der erfindungsgemäßen Kautschukmischung eindringen und so wesentlich später bzw. gar nicht an die Oberfläche desselben gelangen. Der Grund dafür dürfte eine chemische Reaktion der verfärbenden Mischungsbestandteile mit den Epoxigruppen des Polydiens sein. Darüber hinaus wurde festgestellt, daß die Zugabe von Calziumoxid den überraschenden, nicht vorhersehbaren Effekt bringt, daß das epoxidierte Polydien im fertigen Vulkanisat wesentlich weniger zur Verhärtung nach Alterung neigt.

Der oben geschilderte Effekt der starken Reduktion des Eindringens verfärbender Mischungsbestandteile läßt sich dann besonders gut erzielen, wenn der Anteil an epoxidiertem Polydien in der Kautschukmischung zwischen 10 und 30 Gewichtsteilen, bezogen auf 100 Gewichtsteile Kautschuk in der Mischung, beträgt. Aus der Gruppe der epoxidierten Polydiene kommen insbesondere epoxidierte Polyisoprene in Frage, wobei sich epoxiderter Naturkautschuk, der zudem in verschiedenen Typen erhältlich ist, als besonders geeignet herausgestellt hat. Dabei ist es besonders vorteilhaft, wenn ein epoxidierter Naturkautschuk mit einem Anteil von mindestens 20 % Oxiran, insbesondere von mindestens 30 % Oxiran, verwendet wird.

Besonders günstig ist es ferner, wenn der Anteil an Calziumoxid in der Kautschukmischung 2 bis 10 Gewichtsteile, bezogen auf 100 Gewichtsteile Kautschuk in der Mischung, beträgt.

In diesem Zusammenhang hat es sich auch als vorteilhaft herausgestellt, wenn die Kautschukmischung zumindest weitgehend frei von phenolischen Harzen und weiteren aromatischen Mischungsbestandteilen ist.

Es ist insbesondere von Vorteil, wenn die Kautschukmischung als Beschleuniger zumindest zum Teil einen Sulfenamidbeschleuniger, beispielsweise Benzothiazyl-2-tert.-butylsulfenamid (TBBS) enthält, da dieser Beschleuniger einen sehr geringen aromatischen Anteil besitzt.

Aus der Gruppe der halogenierten Butylkautschuke kommt insbesondere ein Chlorbutylkautschuk in einem Anteil von 20 bis 75 Gewichtsteilen, insbesondere von 30 bis 60 Gewichtsteilen, bezogen auf 100 Gewichtsteile Kautschuk in der Mischung, in Frage.

Der Anteil an Äthylen-Propylen-Terpolymer (EPDM) in der Kautschukmischung wird zwischen 10 bis 30 Gewichtsteilen, bezogen auf 100 Gewichtsteile Kautschuk in der Mischung gewählt. Um die erwünschte Einfärbung der Kautschukmischung zu erzielen, werden ihr die entsprechenden Farbstoffe zugesetzt.

Die Erfindung betrifft ferner einen geformten Körper, welcher zumindest zum Teil aus einer Gummimischung, die Ruß enthält, gefertigt ist, auf welcher Gummimischung eine erfindungsgemäße Kautschukmischung doubliert und mitvulkanisiert ist.

Schließlich betrifft die vorliegende Erfindung einen Fahrzeugreifen, der an zumindest einer seiner Seitenwände ein aufdoubliertes und mit dieser mitvulkanisiertes Kennzeichen, Dekor oder dergleichen aus einer erfindungsgemäßen Kautschukmischung aufweist. Diese Kennzeichen oder Dekorelemente sind somit vorteilhafterweise besonders langlebig und neigen nicht zur Verfärbung.

Die Erfindung wird nun anhand der Zeichnung und einiger Mischungsbeispiele näher erläutert. Dabei zeigen Fig. 1 schematisch einen Schnitt durch eine Seitenwand und einen Wulstbereich eines Fahrzeugreifens, Fig. 2 ein Diagramm, welches die geringe Migrationstiefe in ein Vulkanisat aus einer erfindungsgemäßen Kautschukmischung veranschaulicht, Fig. 3 ein weiteres Diagramm, ermittelt mit einem Vulkanisat aus einer Vergleichsmischung, die nicht der gegenständlichen Erfindung entsprach.

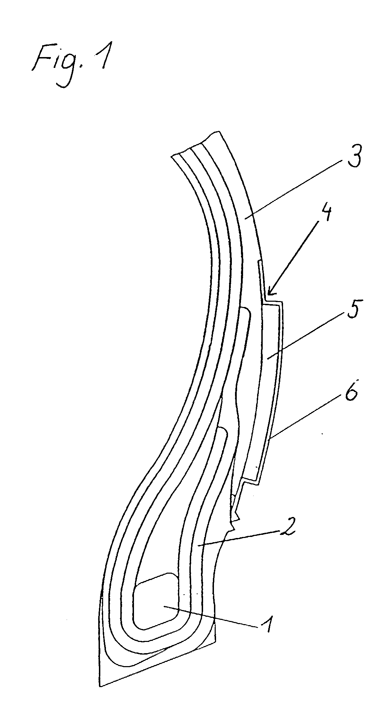

In Fig. 1 ist mit 1 der Wulstkem, mit 2 die Karkasse und mit 3 der eigentliche Seitenwandteil bezeichnet. In einer umlaufenden Vertiefung 4 des Seitenwandteiles 3 wird ein Streifen 5, der aus einer Kautschukmischung nach der vorliegenden Erfindung gefertigt ist, eingebracht. Zu sehen ist ferner, daß auf den Streifen 5 eine Abdeckschicht 6 aufgebracht ist.

Während des Vulkanisationsvorganges in einer herkömmlich gestalteten Vulkanisationsform werden die gewünschten Kennzeichen bzw. Dekorelemente durch entsprechende Formgebung der die Seitenwand formenden Formteile in die Seitenwand eingeprägt. Wie bekannt, wird der fertig vulkanisierte Reifen im Seitenwandbereich abgeschliffen, so daß schließlich das Dekor bzw. die Kennzeichnung zum Vorschein kommt.

Die Kautschukkomponente für die erfindungsgemäße Kautschukmischung umfaßt epoxidertes Polydien, insbesondere epoxidierten Naturkautschuk, in einem Anteil zwischen 5 und 60 Gewichtsteilen, Äthylen-Propylen-Terpolymer (EPDM) in einem Anteil von 10 bis 30 Gewichtsteilen und einen halogenierten Bulykautschuk, insbesondere Chlorbutylkautschuk, in einem Anteil von 20 bis 75 Gewichtsteilen, jeweils bezogen auf 100 Gewichtsteile Kautschuk in der Mischung. Die Mischung enthält ferner als Füllstoff Kaolin, der in einer Menge von 40 bis 80 Gewichtsteilen zugesetzt wird. Es ist weiters günstig, wenn auf Mischungsbestandteile, die phenolische oder aromatische Komponenten beinhalten, zumindest weitgehend verzichtet wird, da diese auch einen gewissen Einfluß auf die Verhärtung des Vulkanisats haben. Aus diesem Grund ist es auch günstig, wenn als Vulkanisationsbeschleuniger ein Sulfenamidbeschleuniger, beispielsweise TBBS (Benzothiazyl-2-tert.-butylsulfenamid) gewählt wird.

Tabelle 1 enthält nun eine Anzahl von Beispielen von nach der Erfindung erstellten Mischungsrezepturen (Biespiele 1 bis 3, 5 und 6), wobei als epoxidiertes Polydien epoxidierter Naturkautschuk mit 50 % Oxiran eingesetzt wurde. Die mit VM bezeichnete Mischungsrezeptur kennzeichnet eine Vergleichsmischung, die "normalen" Naturkautschuk enthielt. In sämtlichen Beispielen beziehen sich die angegebenen Teile auf 100 Gewichtsteile Kautschuk in der Mischung. Dabei handelt es sich ferner bei sämtlichen Mischungsbeispielen um in der Farbe pink eingefärbte Mischungen, was jedoch für die gegenständliche Erfindung nicht von Belang ist, da durch die Auswahl der Farbstoffe jegliche Mischungsfarbe erzielbar ist. Aus den einzelnen Mischungsrezepturen wurden Vulkanisate gefertigt und einem Test unterzogen, um die Verhärtung der Mischung bei Alterung festzustellen. In der Tabelle sind daher zu jeder Mischung die ermittelten Shore Härten A (nach DIN 53505), und zwar jeweils für das ungealterte Vulkanisat und jeweils nach einer Alterungsprozedur (3-tägige Lagerung bei 100°C) enthalten. Wie aus den einzelnen Werten hervorgeht, treten Schwankungen der ermittelten Härten infolge der verschiedenen Anteile der einzelnen Kautschukkomponenten in den einzelnen Mischungen auf, wobei jedoch vor allem auffällt, daß jene Vulkanisate, die als Mischungsbestandteil auch Calziumoxid enthielten, ausgesprochen gering zu einer Verhärtung durch Alterung neigten. Dabei stellte sich ferner heraus, daß auch schon ein geringer Anteil an Calziumoxid in der Mischung (siehe Beispiel 5) eine deutliche Verbesserung bringt.

Unter Heranziehung von Kautschukmischungen gemäß Mischungsbeispiel 1 und Beispiel VM sowie einer herkömmlichen schwarzen Seitenwandmischung für einen Fahrzeugreifen wurden Vulkanisatproben hergestellt, die jeweils eine 5 mm dicke Schicht aus der eingefärbten Mischung und eine 5 mm dicke Schicht aus der Seitenwandmischung aufwiesen.

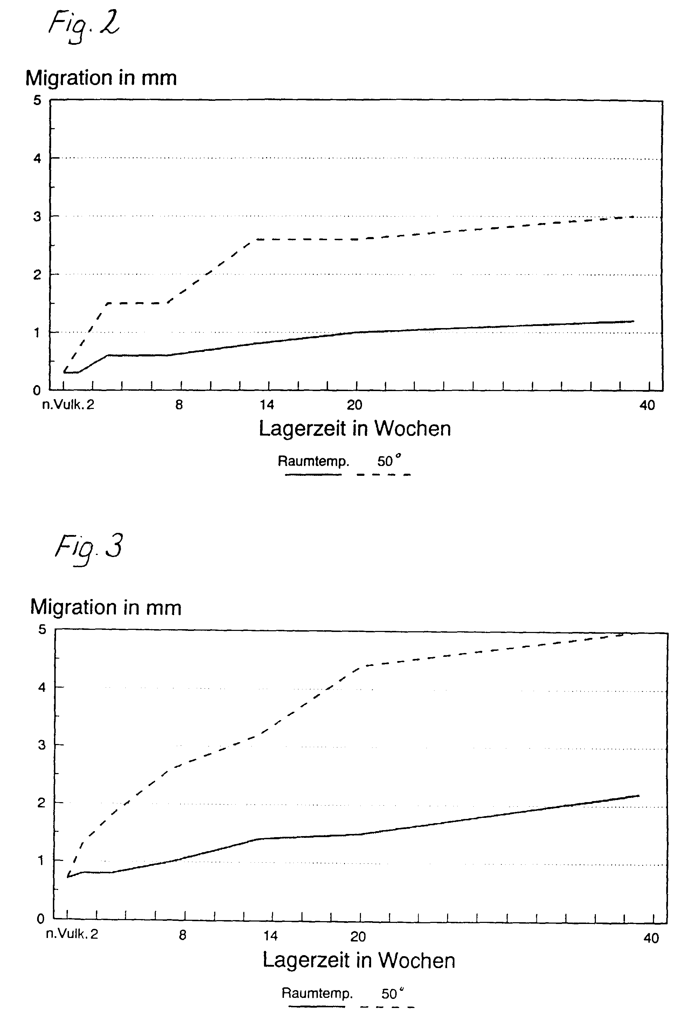

Unter zwei unterschiedlichen Temperaturbedingungen, einmal bei Raumtemperatur, einmal bei einer Temperatur von 50°C wurden diese Vulkanisate über einen Zeitraum von mehreren Wochen gelagert und in regelmäßigen Abständen gemessen, wie weit verfärbende Mischungsbestandteile aus der Seitenwandmischung in die farbige Mischung eingedrungen waren. Die Migrationstiefe wurde durch mehrstündige UV-Belichtung sichtbar gemacht. Das Diagramm in Fig. 2 zeigt dabei die ermittelte Migration in mm für das Vulkanisat, das die erfindungsgemäße Mischung enthielt, das Diagramm in Fig. 3 zeigt die ermittelte Migration in mm für ein Vulkanisat, das die Vergleichsmischung enthielt. Ein Vergleich der beiden Diagramme zeigt deutlich die signifikante Verbesserung, die mit der Mischung, die epoxiderten Naturkautschuk enthielt, erzielt wurde.

Überraschenderweise wurde ferner festgestellt, daß auch ein höherer Anteil an Alterungsschutzmitel in der Seitenwandmischung keine Verschlechterung der Eindringtiefe des Alterungsschutzmittels in jene Mischung bewirkte, die epoxidierten NR enthielt.

**Tabelle:**

| | Beispiele | | | | | | |
|---|---|---|---|---|---|---|---|
| **Mischungsbestandteile** | **1** | **2** | **3** | **4**^{a} | **5** | **6** | **VM** |
| | | | | | | | |
| Epoxidierter NR (Epoxyprene ENR50) | 20 | 10 | 50 | 20 | < | < | - |
| NR | - | - | - | - | - | - | 20 |
| EPDM | 20 | < | < | < | < | < | < |
| Chlorbutyl | 60 | 70 | 30 | 60 | < | < | < |
| Kaolin (Nacap® 290) | 66 | < | < | < | < | < | < |
| Calciumoxid | 5 | < | < | - | 1 | 15 | - |
| Renolrot | 2 | < | < | < | < | < | < |
| Hostaninrot | 0,12 | < | < | < | < | < | < |
| Titandioxid | 2,5 | < | < | < | < | < | < |
| Verarbeitungshilfsmittel (Struktol® A60) | 2 | < | < | < | < | < | < |
| Alterungsschutzmittel | 5 | < | < | < | < | < | < |
| Stearinsäure | 1 | < | < | < | < | < | < |
| Zinkoxid | 5 | < | < | < | < | < | < |
| Beschleuniger TBBS | 0,75 | < | < | < | < | < | < |
| Schwefel | 0,7 | < | < | < | < | < | < |
| Shore Härte A | | | | | | | |
| ungealtertert | 57 | 55 | 60 | 65 | 60 | 57 | 55 |
| gealtert (3 Tage bei 100°C) | 61 | 57 | 65 | 77 | 67 | 60 | 57 |

| | | | | | | | |
|---|---|---|---|---|---|---|---|
| a) Vergleichsbeispiel | | | | | | | |

## Patentansprüche

1. Mit Schwefel vulkanisierbare, rußfreie Kautschukmischung, deren Kautschukkomponente ein Dienelastomer, ein EPDM und einen halogenierten Butylkautschuk umfaßt, und die ferner Kaolin als Füllstoff und weitere übliche Mischungsbestandteile enthält, dadurch gekennzeichnet, daß die Kautschukmischung epoxidiertes Polydien in einem Anteil zwischen 5 und 60 Gewichtsteilen sowie Calziumoxid in einem Anteil von 1 bis 15 Gewichtsteilen, jeweils bezogen auf 100 Gewichtsteile Kautschuk in der Mischung, enthält.

2. Kautschukmischung nach Anspruch 1, dadurch gekennzeichnet, daß der Anteil an epoxidiertem Polydien in der Kautschukmischung zwischen 10 und 30 Gewichtsteilen, bezogen auf 100 Gewichtsteile Kautschuk in der Mischung, beträgt.

3. Kautschukmischung nach Anspruch 1 oder 2, dadurch gekennzeichnet, daß das epoxidierte Polydien ein epoxidiertes Polyisopren ist.

4. Kautschukmischung nach einem der Ansprüche 1 bis 3, dadurch gekennzeichnet, daß das epoxidierte Polydien ein epoxidierter Naturkautschuk ist.

5. Kautschukmischung nach Anspruch 4, dadurch gekennzeichnet, daß der epoxidierte Naturkautschuk mindestens 20 % Oxiran, insbesondere mindestens 30 % Oxiran enthält.

6. Kautschukmischung nach einem der Ansprüche 1 bis 5, dadurch gekennzeichnet, daß der Anteil an Calziumoxid 2 bis 10 Gewichtsteile, bezogen auf 100 Gewichtsteile Kautschuk in der Mischung, beträgt.

7. Kautschukmischung nach einem der Ansprüche 1 bis 6, dadurch gekennzeichnet, daß sie zumindest weitgehend frei von phenolischen Harzen und weiteren aromatischen Mischungsbestandteilen ist.

8. Kautschukmischung nach einem der Ansprüche 1 bis 7, dadurch gekennzeichnet, daß sie als Beschleuniger zumindest zum Teil einen Sulfenamidbeschleuniger, beispielsweise Benzothiazyl-2-tert.-butylsulfenamid (TBBS) enthält.

9. Kautschukmischung nach einem der Ansprüche 1 bis 8, dadurch gekennzeichnet, daß die Kautschukkomponente aus der Gruppe der halogenierten Butylkautschuke Chlorbutylkautschuk in einem Anteil von 20 bis 75 Gewichtsteilen, insbesondere von 30 bis 60 Gewichtsteilen, bezogen auf 100 Gewichtsteile Kautschuk in der Mischung, enthält.

10. Kautschukmischung nach einem der Ansprüche 1 bis 9, dadurch gekennzeichnet, daß der Anteil an EPDM in der Kautschukkomponente zwischen 10 bis 30 Gewichtsteilen, bezogen auf 100 Gewichtsteile Kautschuk in der Mischung, beträgt.

11. Kautschukmischung nach einem der Ansprüche 1 bis 10, dadurch gekennzeichnet, daß sie Farbstoffe enthält.

12. Geformter Körper, welcher zumindest zum Teil eine Ruß enthaltende Gummimischung enthält, auf welcher eine Kautschukmischung gemäß einen der Ansprüche 1 bis 11 doubliert und mitvulkanisert ist.

13. Fahrzeugreifen, der an zumindest einer der Seitenwände ein aufdoubliertes und mit dieser mitvulkanisiertes Kennzeichen, Dekor oder dergleichen aus einer Kautschukmischung gemäß einem der Ansprüche 1 bis 11 aufweist.

## Claims

1. Rubber mixture, which is vulcanisable with sulphur and is free of carbon black, the rubber component of which mixture includes a diene elastomer, an EPDM and a halogenated butyl rubber, and which mixture additionally contains kaolin as the filler substance and further conventional mixture ingredients, characterised in that the rubber mixture contains epoxidised polydiene in a proportion of between 5 and 60 parts by weight and calcium oxide in a proportion of between 1 and 15 parts by weight, each relative to 100 parts by weight rubber in the mixture.

2. Rubber mixture according to claim 1, characterised in that the proportion of epoxidised polydiene in the rubber mixture is between 10 and 30 parts by weight, relative to 100 parts by weight rubber in the mixture.

3. Rubber mixture according to claim 1 or 2, characterised in that the epoxidised polydiene is an epoxidised polyisoprene.

4. Rubber mixture according to one of claims 1 to 3, characterised in that the epoxidised polydiene is an epoxidised natural rubber.

5. Rubber mixture according to claim 4, characterised in that the epoxidised natural rubber contains at least 20 % oxiran, more especially at least 30 % oxiran.

6. Rubber mixture according to one of claims 1 to 5, characterised in that the proportion of calcium oxide is between 2 and 10 parts by weight, relative to 100 parts by weight rubber in the mixture.

7. Rubber mixture according to one of claims 1 to 6, characterised in that it is at least largely free of phenolic resins and additional aromatic mixture ingredients.

8. Rubber mixture according to one of claims 1 to 7, characterised in that it contains as an accelerator at least in part a sulphenamide accelerator, for example benzothiazyl-2-tert.-butylsulphenamide (TBBS).

9. Rubber mixture according to one of claims 1 to 8, characterised in that the rubber component contains, from the group of halogenated butyl rubbers, chlorobutyl rubber in a proportion of between 20 and 75 parts by weight, more especially between 30 and 60 parts by weight, relative to 100 parts by weight rubber in the mixture.

10. Rubber mixture according to one of claims 1 to 9, characterised in that the proportion of EPDM in the rubber component is between 10 and 30 parts by weight, relative to 100 parts by weight rubber in the mixture.

11. Rubber mixture according to one of claims 1 to 10, characterised in that it contains dyestuffs.

12. Moulded body which contains at least in part a rubber mixture containing carbon black, a rubber mixture according to one of claims 1 to 11 being doubled on said mixture and being jointly vulcanised therewith.

13. Vehicle tyre which, on at least one of the side walls, has a doubled-on feature, decoration or the like, which is jointly vulcanised with said wall and is formed from a rubber mixture according to one of claims 1 to 11.

## Revendications

1. Mélange de caoutchouc exempt de noir de fumée, vulcanisable au soufre, dont le composant caoutchouc englobe un élastomère diénique, un EPDM et un butyl halogéné, et qui renferme en outre du kaolin en tant que substance de charge, et d'autres composants de mélange classiques, caractérisé par le fait que le mélange de caoutchouc renferme du polydiène époxydé en une proportion comprise entre 5 et 60 parts pondérales, ainsi que de l'oxyde de calcium en une proportion comprise entre 1 et 15 parts pondérales, respectivement rapportées à 100 parts pondérales de caoutchouc dans le mélange.

2. Mélange de caoutchouc selon la revendication 1, caractérisé par le fait que la proportion de polydiène époxydé, dans le mélange de caoutchouc, est comprise entre 10 et 30 parts pondérales rapportées à 100 parts pondérales de caoutchouc dans le mélange.

3. Mélange de caoutchouc selon la revendication 1 ou 2, caractérisé par le fait que le polydiène époxydé est un polyisoprène époxydé.

4. Mélange de caoutchouc selon l'une des revendications 1 à 3, caractérisé par le fait que le polydiène époxydé est un caoutchouc naturel époxydé.

5. Mélange de caoutchouc selon la revendication 4, caractérisé par le fait que le caoutchouc naturel époxydé renferme au moins 20 % d'oxirane, en particulier au moins 30 % d'oxirane.

6. Mélange de caoutchouc selon l'une des revendications 1 à 5, caractérisé par le fait que la proportion d'oxyde de calcium est comprise entre 2 et 10 parts pondérales rapportées à 100 parts pondérales de caoutchouc dans le mélange.

7. Mélange de caoutchouc selon l'une des revendications 1 à 6, caractérisé par le fait qu'il est au moins largement exempt de résines phénoliques et d'autres composants aromatiques de mélange.

8. Mélange de caoutchouc selon l'une des revendications 1 à 7, caractérisé par le fait qu'il renferme, en tant qu'activateur, au moins en partie un activateur à base de sulfénamide, par exemple benzothiazyl-2-tert.-butylsulfénamide (TBBS).

9. Mélange de caoutchouc selon l'une des revendications 1 à 8, caractérisé par le fait que le composant caoutchouc renferme, parmi le groupe des butyls halogénés, du chlorbutyl caoutchouc en une proportion comprise entre 20 et 75 parts pondérales, notamment de 30 à 60 parts pondérales rapportées à 100 parts pondérales de caoutchouc dans le mélange.

10. Mélange de caoutchouc selon l'une des revendications 1 à 9, caractérisé par le fait que la proportion d'EPDM, dans le composant caoutchouc, est comprise entre 10 et 30 parts pondérales rapportées à 100 parts pondérales de caoutchouc dans le mélange.

11. Mélange de caoutchouc selon l'une des revendications 1 à 10, caractérisé par le fait qu'il renferme des colorants.

12. Corps moulé comprenant, au moins en partie, un mélange de caoutchouc renfermant du noir de fumée, sur lequel un mélange de caoutchouc conforme à l'une des revendications 1 à 11 est plaqué et soumis à vulcanisation conjointe.

13. Pneumatique de véhicule présentant, sur au moins l'un des flancs, une indication caractéristique, un ornement ou motif similaire en un mélange de caoutchouc conforme à l'une des revendications 1 à 11, plaqué(e) et soumis(e) à vulcanisation conjointement audit flanc.
